# EUROPEAN PATENT SPECIFICATION

(11) **EP 3 619 782 B1**
(45) Date of publication and mention of the grant of the patent: **30.03.2022**
(21) Application number: 18793894.9
(22) Date of filing: 17.04.2018
(51) Int. Cl.: H02G 15/18, B60R 16/02, H01R 4/02, H01R 9/00, H02G 15/14, H02G 15/013, H02G 15/115

(54) **SPLICED SHIELDED WIRE CABLE AND METHOD OF MANUFACTURING SAME**
VERSPLEISSTES ABGESCHIRMTES DRAHTKABEL UND HERSTELLUNGSVERFAHREN DAFÜR
CÂBLE À FIL BLINDÉ ÉPISSÉ ET SON PROCÉDÉ DE FABRICATION

(30) Priority: 05.05.2017 US 201762502067 P
(43) Date of publication of application: 11.03.2020
(73) Proprietor: Delphi Technologies, Inc., Troy, MI 48007-5052 (US)
(72) Inventor: VOLPONE, Thomas A., Cortland, OH 44410 (US); TAYLOR, Bruce D., Cortland, OH 44410 (US); ILER, Troy A., Salem, OH 44460 (US); POMA, Eric B., Hubbard, OH 44425 (US)
(74) Representative: Westphal, Mussgnug & Partner, Patentanwälte mbB
(86) International application number: PCT/US2018/027875
(87) International publication number: WO 2018/204063

(56) References cited:
- EP-A1- 3 073 585
- WO-A1-2014/070851
- US-A1- 2008 087 466
- US-A1- 2009 283 294
- US-A1- 2013 146 355
- US-A1- 2015 114 711
- US-A1- 2016 344 176
- US-B1- 6 963 690

## Description

### CROSS-REFERENCE TO RELATED APPLICATION

Publication US 2015/0114711 A1 discloses a method of splicing shielded wire cables includes the steps of providing a first, second, and third shielded wire cable each having a core conductor axially surrounded by a shield conductor which is axially surrounded by an insulative jacket, providing a flexible insulation layer, a flexible conductive layer, and a section of dual wall heat shrink tubing. The first portion of the flexible insulation layer about the joined first, second, and third core conductors, wrapping the flexible conductive layer about the first, second, and third shield conductors, and disposing the flexible conductive layer and portions of the first, second, and third insulative jacket within the section of dual wall heat shrink tubing, thus forming a shielded wire cable splice. Publication US 2013/0146355 A1 discloses a cable breakout assembly including a feeder cable, a breakout structure having a first end threadedly engaged with a cable nut having a single-port cable gland through which the feeder cable extends, a central conduit which houses the sections of the feeder cable passing there through, and an opposed second end threadedly engaged with a cable nut having a multiport cable gland, whose number of ports corresponds to the number of splices of the feeder cable. Publication WO 2014/070851 A1 discloses a wire cable assembly having a plurality of shielded of wire cables spliced together. The center conductors are joined together and enclosed in an inner insulator. The shield conductors of the cable are joined by an electrically conductive sleeve enclosing the inner insulator and attached to the shield conductors of the shielded wire cables. The sleeve separates the outer insulating layers of the shielded wire cables. The sleeve is encased by an outer insulator that is sealed to the outer insulating layers of the shielded wire cables. Publication US 2016/344176 A1 discloses a wire harness having at least wire harness assembly having a splice of at least three shielded wire cables. The assembly includes a flexible insulation layer wrapped about the joined core conductors of the three cables, a flexible conductive layer wrapped about the shield conductors of the cables, and a section of dual wall heat shrink tubing enclosing the flexible conductive layer and portions of the insulative jackets of the cables. The flexible conductive layer does not include any solder. Publication EP 3 073 585 A1 discloses a further example of an electromagnetic interference splice shield.

### TECHNICAL FIELD OF THE INVENTION

The invention generally relates to a method for splicing shielded wire cables and the spliced wire cables produced by this method.

### BRIEF DESCRIPTION OF THE SEVERAL VIEWS OF THE DRAWING

The present invention will now be described, by way of example with reference to the accompanying drawings, in which:
Fig. 1 is an illustration of a wire harness assembly having several shielded wire cables spliced together in accordance an embodiment of the invention;
Fig. 2 is an illustration of a wire harness assembly having a core conductor splice connection in accordance with an embodiment of the invention;
Fig. 3 is an illustration of a wire harness assembly having a flexible insulative layer wrapped about the spliced shielded wire cable of Fig. 2 in accordance with an embodiment of the invention;
Fig. 4 is an illustration of a wire harness assembly having a flexible conductive layer wrapped about the exposed shield conductors of the shielded wire cables of Fig. 3 in accordance with an embodiment of the invention;
Fig. 5 is an illustration of a wire harness assembly having a section of heat shrink tubing wrapped about the flexible conductive layer of Fig. 4 in accordance with an embodiment of the invention;
Fig. 6 is an illustration of the wire harness assembly of Fig. 5 being inserted within a cavity of an insulative housing in accordance with an embodiment of the invention;
Fig. 7 is an illustration of the wire harness assembly of Fig. 6 prior to insertion of the seals within the housing and the attachment the retainer caps to the housing in accordance with an embodiment of the invention; and
Fig. 8 is a flowchart of a process of forming a wire harness assembly in accordance with another embodiment of the invention.

### DETAILED DESCRIPTION OF THE INVENTION

Reference will now be made in detail to embodiments, examples of which are illustrated in the accompanying drawings. In the following detailed description, numerous specific details are set forth in order to provide a thorough understanding of the various described embodiments.

Described herein are devices and methods for splicing two or more shielded wire cables. The devices and methods may be used to splice shielded wire cables with a single core conductor or multiple core connectors. The devices and methods described herein may be used to splice together two shield wire cables, for example to repair a cut cable. The devices and methods described herein may also be used to splice one shielded wire cable to two or more shielded wire cables to form a Y-splice or H-splice. The devices and methods described herein may be used for splicing a variety of shielded wire cables types, for example shielded wire cables for communication transmissions, such as RG-59 cable, or high voltage shielded wire cables designed for electrical or hybrid electrical vehicles.

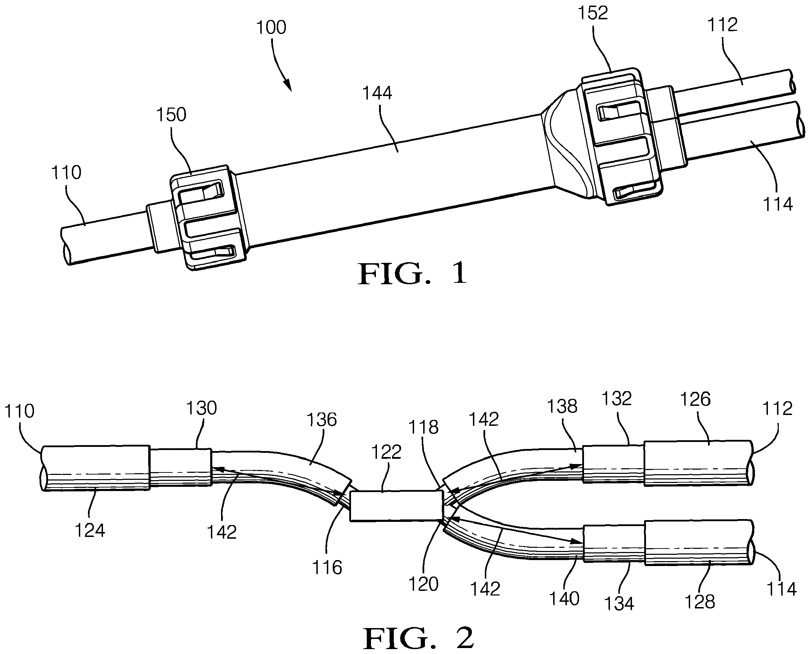

Fig. 1 illustrates a wire harness assembly 100 having three shielded wire cables 110, 112, 114 that are spliced together. The spliced portion is protected by a tubular insulative housing 144.

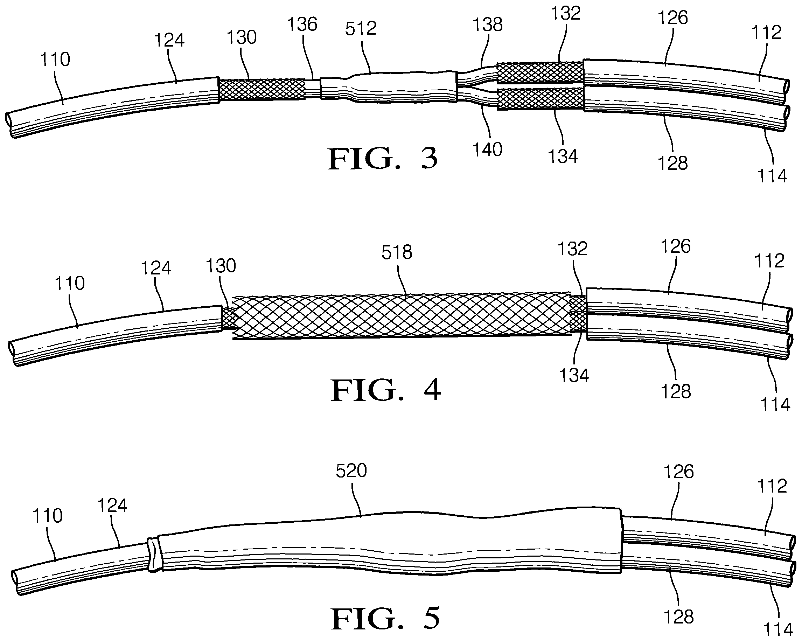

Fig. 3 illustrates an example of three high voltage shielded wire cables a first shielded cable 110, a second shielded cable 112, and a third shielded cable 114 that have been spliced together. A core conductor 116, 118, 120 of each of the shielded cables 110, 112, 114 has been joined by a sonic welding process to form a connection 122. Portions of the outer insulation layers 124, 126, 128, shield conductors 130, 132, 134, and inner insulation layers 136, 138, 140 have been removed from the core conductors 116, 118, 120 prior forming the connection 122. An additional portion of each of the shield conductors 130, 132, 134 may be removed or cut way to provide adequate voltage creepage distance 142 to prevent a leakage current between the core conductors 116, 118, 120 and the shield conductors 130, 132, 134, thereby exposing the inner insulation layers 136, 138, 140 of the shielded cables 110, 112, 114.

As illustrated in Fig 3, a flexible insulation layer 512 is wrapped about the joined portion 122 and the exposed portions of the core conductors 116, 118, 120 so as to completely cover and enclose the exposed portions of the core conductors 116, 118, 120 while leaving the shield conductors 130, 132, 134 exposed as shown in Fig. 3. The flexible insulation layer 512 may be formed of a flexible dielectric material such as heat shrinkable plastic tubing, cloth tape, or plastic tape.

As shown in Fig. 4, a flexible conductive layer 518 is wrapped about the flexible insulation layer 512 and over at least a portion of the exposed shield conductors 130, 132, 134 so that it is electrical contact with all of the shield conductors 130, 132, 134 as shown in Fig. 4. The flexible conductive layer 518 is preferably not in contact with the outer insulation layers 124, 126, 126 of the shielded wire cables 110, 112, 114. This flexible conductive layer 518 may be a sleeve of braided copper wires or a metal foil.

As illustrated in Fig. 5, a section of thermoplastic heat shrink tubing 520 is applied over the flexible conductive layer 518 and heated so that it is in compressive contact with the flexible conductive layer 518 and portions of the outer insulation layers 124, 126, 126 of the shielded wire cables 110, 112, 114. The heat shrink tubing 520 sealably engages the outer insulation layers 124, 126, 128 of at least one of the shielded wire cables 110, 112, 114 and encloses the flexible conductive layer 518 as shown in Fig 5. As used herein, sealably engaged means that the heat shrink tubing 520 will resist contaminants, such as dust, dirt, or fluids, from entering between the outer insulation layers 124, 126, 128 and the heat shrink tubing 520. It does not mean that it provides a hermetic seal. Suitable compositions and sources of heat shrink tubing are well known to those skilled in the art. The heat shrink tubing 520 may be preloaded onto the blunt cut single shielded wire cable 110 prior to forming the connection 1

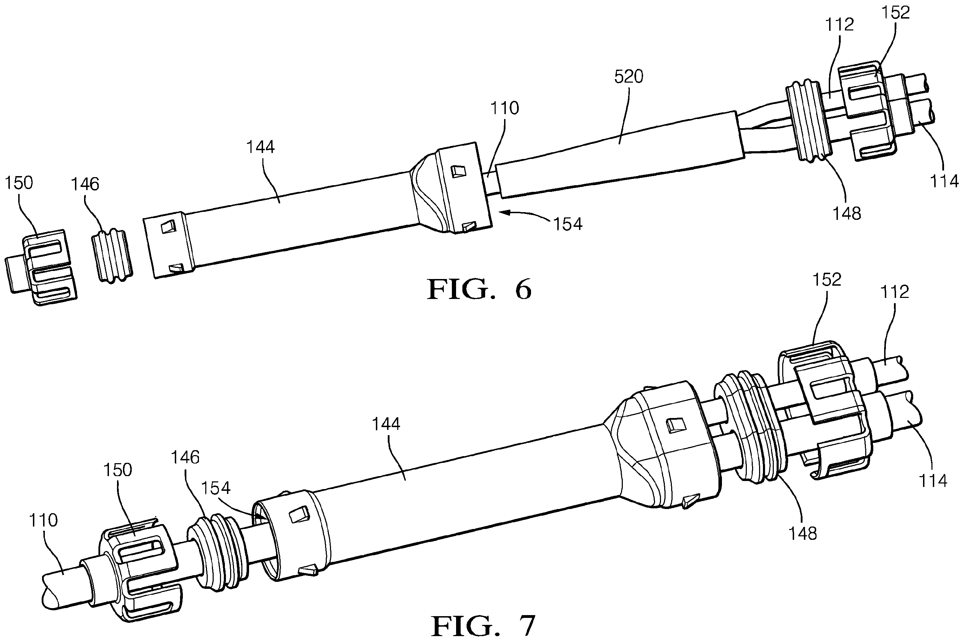

As illustrated in Figs 6 and 7, the spliced wire cables with the heat shrink tubing 520 applied are placed within a longitudinal cavity 154 of an insulative housing 144 formed of a dielectric material such as polybutylene terephthalate (PBT) or polyamide (PA, NYLON). A single wire seal 146 formed of a compliant material, such as a silicone-based rubber is applied to the first shielded cable 110 and a dual wire seal 148 also formed of a compliant material is applied to the second and third shielded cables 112, 114 and then inserted within the cavity of the housing 144 such that the first and second wire seals 146, 148 are in sealably engaged with the wire cables and an inner surface of the cavity. Seal retainers 150, 152 are attached to the housing 144 and hold the first and second wire seals 146, 148 within the housing 144.

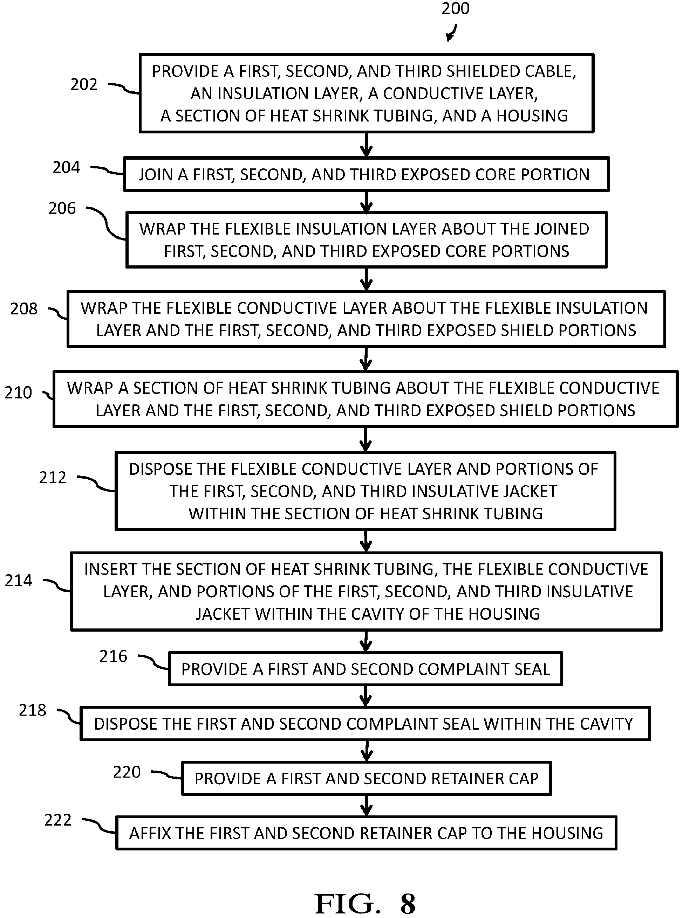

Fig. 8 illustrates an exemplary method 200 of splicing shielded wire cables 110, 112, 114 together. The method 200 includes the following steps.

STEP 202, PROVIDE A FIRST, SECOND, AND THIRD SHIELDED CABLE, AN INSULATION LAYER, A CONDUCTIVE LAYER, A SECTION OF HEAT SHRINK TUBING, AND A HOUSING, includes providing a first shielded cable 110 having a first core conductor 116 at least partially axially surrounded by a first shield conductor 130 which is at least partially axially surrounded by a first insulative jacket 124, the first core conductor 116 having a first exposed core portion and the first shield conductor 130 having a first exposed shield portion, providing a second shielded wire cable 112 having a second core conductor 118 at least partially axially surrounded by a second shield conductor 132 which is at least partially axially surrounded by a second insulative jacket 126, the second core conductor 118 having a second exposed core portion and the second shield conductor 132 having a second exposed shield portion, providing a third shielded wire cable 114 having a third core conductor 120 at least partially axially surrounded by a third shield conductor 134 which is at least partially axially surrounded by a third insulative jacket 128, the third core conductor 120 having a third exposed core portion and the third shield conductor 134 having a third exposed shield portion, providing a flexible insulation layer 512, providing a flexible conductive layer 518, providing a section of heat shrink tubing 520, and providing an insulative housing 144 having a longitudinal cavity 154 extending therethrough;

STEP 204, JOIN A FIRST, SECOND, AND THIRD EXPOSED CORE PORTION, includes joining 122 the first, second, and third exposed core portions using a sonic welding process;

STEP 206, WRAP THE FLEXIBLE INSULATION LAYER ABOUT THE JOINED FIRST, SECOND, AND THIRD EXPOSED CORE PORTIONS, includes wrapping the flexible insulation layer 512 about the joined first, second, and third exposed core portions;

STEP 208, WRAP THE FLEXIBLE CONDUCTIVE LAYER ABOUT THE FLEXIBLE INSULATION LAYER AND THE FIRST, SECOND, AND THIRD EXPOSED SHIELD PORTIONS, includes wrapping the flexible conductive layer 518 about the flexible insulation layer 512 and the first, second, and third exposed shield portions;

STEP 210, WRAP A SECTION OF HEAT SHRINK TUBING ABOUT THE FLEXIBLE CONDUCTIVE LAYER AND THE FIRST, SECOND, AND THIRD EXPOSED SHIELD PORTIONS, includes wrapping a section of heat shrink tubing 520 about the flexible conductive layer 518 and the first, second, and third exposed shield portions;

STEP 212, DISPOSE THE FLEXIBLE CONDUCTIVE LAYER AND PORTIONS OF THE FIRST, SECOND, AND THIRD INSULATIVE JACKET WITHIN THE SECTION OF HEAT SHRINK TUBING, includes disposing the flexible conductive layer 518 and portions of the first, second, and third insulative jacket 124, 126 128 within the section of heat shrink tubing 520;

STEP 214, INSERT THE SECTION OF HEAT SHRINK TUBING, THE FLEXIBLE CONDUCTIVE LAYER, AND PORTIONS OF THE FIRST, SECOND, AND THIRD INSULATIVE JACKET WITHIN THE CAVITY OF THE HOUSING, includes inserting the section of heat shrink tubing 520, the flexible conductive layer 518, and portions of the first, second, and third insulative jacket 124, 126, 128 within the cavity 154 of the housing 144;

STEP 216, PROVIDE A FIRST AND SECOND COMPLAINT SEAL, is an optional step that includes providing a first compliant seal 146 and a second compliant seal 148;

STEP 218, DISPOSE THE FIRST AND SECOND COMPLAINT SEAL WITHIN THE CAVITY, is an optional step that includes disposing the first compliant seal 146 within the longitudinal cavity 154 of the housing 144 intermediate the first insulative jacket 124 and the housing 144 and disposing the second compliant seal 148 within the longitudinal cavity 154 of the housing 144 intermediate the second insulative jacket 126, the third insulative jacket 128, and the housing 144;

STEP 220, PROVIDE A FIRST AND SECOND RETAINER CAP, is an optional step that includes providing a first retainer cap 150 and a second retainer cap 152; and

STEP 222, AFFIX THE FIRST AND SECOND RETAINER CAP TO THE HOUSING, is an optional step that includes affixing the first retainer cap 150 to the housing 144, thereby retaining the first compliant seal 146 within the housing 144 and affixing the second retainer cap 152 to the housing 144, thereby retaining the second compliant seal 148 within the housing 144.

Accordingly, a shielded wire harness assembly 100 and a method 200 of splicing a plurality of shielded wire cables 110, 112, 114 are provided. The wire harness assembly 100 and method 200 eliminates need for ferrules on the shielded cables 110, 112, 114 and reduces the package size of the previous housing designs, while still providing a hard shell housing 144 with provisions for attachment clips as is preferred by automotive original equipment manufacturers (OEMs). The housing 144 protects the welded cores 122 from surface damage from sharp objects in vehicle mounting conditions and allows processing with existing welding equipment.

## Claims

1. A wire harness assembly (100), comprising:
a first shielded wire cable (110) having a first core conductor (116) at least partially axially surrounded by a first shield conductor (130) which is at least partially axially surrounded by a first insulative jacket (124), the first core conductor ( 116) having a first exposed core portion and the first shield conductor (130) having a first exposed shield portion;
a second shielded wire cable (112) having a second core conductor (118) at least partially axially surrounded by a second shield conductor (132) which is at least partially axially surrounded by a second insulative jacket (126), the second core conductor (118) having a second exposed core portion and the second shield conductor (132) having a second exposed shield portion;
a third shielded wire cable (114) having a third core conductor (120) at least partially axially surrounded by a third shield conductor (134) which is at least partially axially surrounded by a third insulative jacket (128), the third core conductor (120) having a third exposed core portion and the third shield conductor (134) having a third exposed shield portion, wherein the first exposed core portion is sonically welded to the second exposed core portion and the third exposed core portion;
a flexible insulative layer (512) wrapped about the sonically welded first, second, and third exposed core portions (122);
a flexible conductive layer (518) wrapped about the flexible insulative layer (512) and the first, second, and third exposed shield portions; **characterized by**
a section of heat shrink tubing (520) in which the flexible conductive layer (518) and portions of the first, second, and third insulative jackets (124, 126, 128) are enclosed, wherein the section of heat shrink tubing (520) is in compressive contact with the flexible conductive layer (518) and the portions of the first, second, and third insulative jackets (124, 126, 128), and sealably engages the first, second, and third insulative jackets (124, 126, 128); and
an insulative housing (144) having a longitudinal cavity (154) extending therethrough in which the section of heat shrink tubing (520), the flexible conductive layer (518), and portions of the first, second, and third insulative jackets (124, 126, 128) are disposed.

2. The wire harness assembly (100) according to claim 1, wherein the flexible conductive layer (518) is formed of braided wire strands.

3. The wire harness assembly (100) according to claims 1 or 2, further comprising:
a first compliant seal (146) disposed within the longitudinal cavity (154) intermediate the first insulative jacket (124) and the insulative housing (144); and
a second compliant seal (148) disposed within the longitudinal cavity (154) intermediate the second insulative jacket (126), the third insulative jacket (128), and the insulative housing ( 144 ).

4. The wire harness assembly (100) according to claim 3, further comprising:
a first retainer cap (150) attached to the insulative housing (144) configured to retain the first compliant seal (146) within the insulative housing (144); and
a second retainer cap (152) attached to the insulative housing (144) configured to retain the second compliant seal (148) within the insulative housing (144).

5. A method (200) of forming a wire harness assembly (100), comprising the steps of:
providing (202) a first shielded wire cable (110) having a first core conductor (116) at least partially axially surrounded by a first shield conductor (130) which is at least partially axially surrounded by a first insulative jacket (124), the first core conductor (116) having a first exposed core portion and the first shield conductor (130) having a first exposed shield portion;
providing (202) a second shielded wire cable (112) having a second core conductor (118) at least partially axially surrounded by a second shield conductor (132) which is at least partially axially surrounded by a second insulative jacket (126), the second core conductor (118) having a second exposed core portion and the second shield conductor (132) having a second exposed shield portion;
providing (202) a third shielded wire cable (114) having a third core conductor (120) at least partially axially surrounded by a third shield conductor (134) which is at least partially axially surrounded by a third insulative jacket (128), the third core conductor (120) having a third exposed core portion and the third shield conductor (134) having a third exposed shield portion;
providing (202) a flexible insulation layer (512);
providing (202) a flexible conductive layer (518);
providing (202) a section of heat shrink tubing (520);
providing (202) an insulative housing (144) having a longitudinal cavity (154) extending therethrough;
joining (204) the first, second, and third exposed core portions using a sonic welding process;
wrapping (206) the flexible insulation layer (512) about the joined first, second, and third exposed core portions (122);
wrapping (208) the flexible conductive layer (518) about the flexible insulation layer (512) and the first, second, and third exposed shield portions;
**characterized by**
wrapping (210) the section of heat shrink tubing (520) about the flexible conductive layer (518) and the first, second, and third exposed shield portions;
disposing (212) the flexible conductive layer (518) and portions of the first, second, and third insulative jackets (124, 126, 128) within the section of heat shrink tubing (520);
heating the section of heat shrink tubing (520) so that it is in compressive contact with the flexible conductive layer (518) and the portions of the first, second, and third insulative jackets (124, 126, 128), wherein the section of heat shrink tubing (520) sealably engages the first, second, and third insulative jackets (124, 126, 128); and
inserting (214) the section of heat shrink tubing (520), the flexible conductive layer (518), and portions of the first, second, and third insulative jacket (124, 126, 128) within the longitudinal cavity (154) of the insulative housing (144).

6. The method (200) according to claim 5, wherein the flexible conductive layer (518) is formed of braided wire strands.

7. The method (200) according to claim 5 or 6, further comprising the steps of:
providing (216) a first compliant seal (146) and a second compliant seal (148);
disposing (218) the first compliant seal (146) within the longitudinal cavity (154) intermediate the first insulative jacket (124) and the insulative housing (144); and
disposing (218) the second compliant seal (148) within the longitudinal cavity (154) intermediate the second insulative jacket (126), the third insulative jacket (128), and the insulative housing (144).

8. The method (200) according to claim 7, further comprising the steps of:
providing (220) a first retainer cap (150) and a second retainer cap (152);
affixing (222) the first retainer cap (150) to the insulative housing (144), thereby retaining the first compliant seal (146) within the insulative housing (144); and
affixing (222) the second retainer cap (152) to the insulative housing (144) thereby, retaining the second compliant seal (148) within the insulative housing (144).

## Patentansprüche

1. Kabelbaumbaugruppe (100), die Folgendes umfasst:
ein erstes abgeschirmtes Drahtkabel (110) mit einem ersten Kernleiter (116), der zumindest teilweise axial durch einen ersten Abschirmungsleiter (130) umgeben ist, der zumindest teilweise axial durch einen ersten Isoliermantel (124) umgeben ist, wobei der erste Kernleiter (116) einen ersten freigelegten Kernabschnitt aufweist und der erste Abschirmungsleiter (130) einen ersten freigelegten Abschirmungsabschnitt aufweist;
ein zweites abgeschirmtes Drahtkabel (112) mit einem zweiten Kernleiter (118), der zumindest teilweise axial durch einen zweiten Abschirmungsleiter (132) umgeben ist, der zumindest teilweise axial durch einen zweiten Isoliermantel (126) umgeben ist, wobei der zweite Kernleiter (118) einen zweiten freigelegten Kernabschnitt aufweist und der zweite Abschirmungsleiter (132) einen zweiten freigelegten Abschirmungsabschnitt aufweist;
ein drittes abgeschirmtes Drahtkabel (114) mit einem dritten Kernleiter (120), der zumindest teilweise axial durch einen dritten Abschirmungsleiter (134) umgeben ist, der zumindest teilweise axial durch einen dritten Isoliermantel (128) umgeben ist, wobei der dritte Kernleiter (120) einen dritten freigelegten Kernabschnitt aufweist und der dritte Abschirmungsleiter (134) einen dritten freigelegten Abschirmungsabschnitt aufweist, wobei der erste freigelegte Kernabschnitt mittels Schall an den zweiten freigelegten Kernabschnitt und den dritten freigelegten Kernabschnitt geschweißt ist;
eine flexible Isolierschicht (512), die um den ersten, zweiten und dritten freigelegten Kernabschnitt (122), die mittels Schall geschweißt sind, gewickelt ist;
eine flexible leitfähige Schicht (518), die um die flexible Isolierschicht (512) und den ersten, zweiten und dritten freigelegten Abschirmungsabschnitt gewickelt ist;
**gekennzeichnet durch**
einen Bereich eines Wärmeschrumpfschlauchs (520), in dem die flexible leitfähige Schicht (518) und Abschnitte des ersten, zweiten und dritten Isoliermantels (124, 126, 128) umschlossen sind, wobei der Bereich des Wärmeschrumpfschlauchs (520) in Druckkontakt mit der flexiblen leitfähigen Schicht (518) und den Abschnitten des ersten, zweiten und dritten Isoliermantels (124, 126, 128) steht und abdichtend in den ersten, zweiten und dritten Isoliermantel (124, 126, 128) eingreift; und
ein Isoliergehäuse (144) mit einem sich hindurch erstreckenden Längshohlraum (154), in dem der Bereich des Wärmeschrumpfschlauchs (520), die flexible leitfähige Schicht (518) und Abschnitte des ersten, zweiten und dritten Isoliermantels (124, 126, 128) angeordnet sind.

2. Kabelbaumbaugruppe (100) nach Anspruch 1, wobei die flexible leitfähige Schicht (518) aus verflochtenen Drahtfäden gebildet ist.

3. Kabelbaumbaugruppe (100) nach Ansprüchen 1 oder 2, ferner umfassend:
eine erste nachgiebige Dichtung (146), die in dem Längshohlraum (154) zwischen dem ersten Isoliermantel (124) und dem Isoliergehäuse (144) angeordnet ist; und
eine zweite nachgiebige Dichtung (148), die in dem Längshohlraum (154) zwischen dem zweiten Isoliermantel (126), dem dritten Isoliermantel (128) und dem Isoliergehäuse (144) angeordnet ist.

4. Kabelbaumbaugruppe (100) nach Anspruch 3, ferner umfassend:
eine erste Rückhaltekappe (150), die an dem Isoliergehäuse (144) befestigt ist, die dazu konfiguriert ist, die erste nachgiebige Dichtung (146) in dem Isoliergehäuse (144) zurückzuhalten; und
eine zweite Rückhaltekappe (152), die an dem Isoliergehäuse (144) befestigt ist, die dazu konfiguriert ist, die zweite nachgiebige Dichtung (148) in dem Isoliergehäuse (144) zurückzuhalten.

5. Verfahren (200) zum Ausbilden einer Kabelbaumbaugruppe (100), das die folgenden Schritte umfasst:
Bereitstellen (202) eines ersten abgeschirmten Drahtkabels (110) mit einem ersten Kernleiter (116), der zumindest teilweise axial durch einen ersten Abschirmungsleiter (130) umgeben ist, der zumindest teilweise axial durch einen ersten Isoliermantel (124) umgeben ist, wobei der erste Kernleiter (116) einen ersten freigelegten Kernabschnitt aufweist und der erste Abschirmungsleiter (130) einen ersten freigelegten Abschirmungsabschnitt aufweist;
Bereitstellen (202) eines zweiten abgeschirmten Drahtkabels (112) mit einem zweiten Kernleiter (118), der zumindest teilweise axial durch einen zweiten Abschirmungsleiter (132) umgeben ist, der zumindest teilweise axial durch einen zweiten Isoliermantel (126) umgeben ist, wobei der zweite Kernleiter (118) einen zweiten freigelegten Kernabschnitt aufweist und der zweite Abschirmungsleiter (132) einen zweiten freigelegten Abschirmungsabschnitt aufweist;
Bereitstellen (202) eines dritten abgeschirmten Drahtkabels (114) mit einem dritten Kernleiter (120), der zumindest teilweise axial durch einen dritten Abschirmungsleiter (134) umgeben ist, der zumindest teilweise axial durch einen dritten Isoliermantel (128) umgeben ist, wobei der dritte Kernleiter (120) einen dritten freigelegten Kernabschnitt aufweist und der dritte Abschirmungsleiter (134) einen dritten freigelegten Abschirmungsabschnitt aufweist,
Bereitstellen (202) einer flexiblen Isolierschicht (512);
Bereitstellen (202) einer flexiblen leitfähigen Schicht (518);
Bereitstellen (202) eines Bereichs eines Wärmeschrumpfschlauchs (520);
Bereitstellen (202) eines Isoliergehäuses (144) mit einem sich hindurch erstreckenden Längshohlraum (154);
Zusammenfügen (204) des ersten, zweiten und dritten freigelegten Kernabschnitts unter Verwendung eines Schallschweißvorgangs;
Wickeln (206) der flexiblen Isolierschicht (512) um den ersten, zweiten und dritten freigelegten Kernabschnitt (122), die zusammengefügt wurden;
Wickeln (208) der flexiblen leitfähigen Schicht (518) um die flexible Isolierschicht (512) und den ersten, zweiten und dritten freigelegten Abschirmungsabschnitt;
**gekennzeichnet durch**
Wickeln (210) des Bereichs des Wärmeschrumpfschlauchs (520) um die flexible leitfähige Schicht (518) und den ersten, zweiten und dritten freigelegten Abschirmungsabschnitt;
Anordnen (212) der flexiblen leitfähigen Schicht (518) und von Abschnitten des ersten, zweiten und dritten Isoliermantels (124, 126, 128) in dem Bereich des Wärmeschrumpfschlauchs (520);
Erwärmen des Bereichs des Wärmeschrumpfschlauchs (520), sodass er in Druckkontakt mit der flexiblen leitfähigen Schicht (518) und den Abschnitten des ersten, zweiten und dritten Isoliermantels (124, 126, 128) steht, wobei der Bereich des Wärmeschrumpfschlauchs (520) abdichtend in den ersten, zweiten und dritten Isoliermantel (124, 126, 128) eingreift; und
Einführen (214) des Bereichs des Wärmeschrumpfschlauchs (520), der flexiblen leitfähigen Schicht (518) und der Abschnitte des ersten, zweiten und dritten Isoliermantels (124, 126, 128) in den Längshohlraum (154) des Isoliergehäuses (144).

6. Verfahren (200) nach Anspruch 5, wobei die flexible leitfähige Schicht (518) aus verflochtenen Drahtfäden gebildet ist.

7. Verfahren (200) nach Anspruch 5 oder 6, das ferner die folgenden Schritte umfasst:
Bereitstellen (216) einer ersten nachgiebigen Dichtung (146) und einer zweiten nachgiebigen Dichtung (148);
Anordnen (218) der ersten nachgiebigen Dichtung (146) in dem Längshohlraum (154) zwischen dem ersten Isoliermantel (124) und dem Isoliergehäuse (144); und
Anordnen (218) der zweiten nachgiebigen Dichtung (148) in dem Längshohlraum (154) zwischen dem zweiten Isoliermantel (126), dem dritten Isoliermantel (128) und dem Isoliergehäuse (144) .

8. Verfahren (200) nach Anspruch 7, das ferner die folgenden Schritte umfasst:
Bereitstellen (220) einer ersten Rückhaltekappe (150) und einer zweiten Rückhaltekappe (152);
Anbringen (222) der ersten Rückhaltekappe (150) an dem Isoliergehäuse (144), wodurch die erste nachgiebige Dichtung (146) in dem Isoliergehäuse (144) zurückgehalten wird; und
Anbringen (222) der zweiten Rückhaltekappe (152) an dem Isoliergehäuse (144), wodurch die zweite nachgiebige Dichtung (148) in dem Isoliergehäuse (144) zurückgehalten wird.

## Revendications

1. Ensemble de faisceaux de fils (100), comprenant :
un premier câble à fil blindé (110) ayant un premier conducteur central (116) entouré au moins partiellement axialement par un premier conducteur de blindage (130) qui est au moins partiellement entouré axialement par une première gaine isolante (124), le premier conducteur central (116) ayant une première partie centrale exposée et le premier conducteur de blindage (130) ayant une première partie de blindage exposée ;
un deuxième câble à fil blindé (112) ayant un deuxième conducteur central (118) entouré au moins partiellement axialement par un deuxième conducteur de blindage (132) qui est au moins partiellement entouré axialement par une deuxième gaine isolante (126), le deuxième conducteur central (118) ayant une deuxième partie centrale exposée et le deuxième conducteur de blindage (132) ayant une deuxième partie de blindage exposée ;
un troisième câble à fil blindé (114) ayant un troisième conducteur central (120) entouré au moins partiellement axialement par un troisième conducteur de blindage (134) qui est au moins partiellement entouré axialement par une troisième gaine isolante (128), le troisième conducteur central (120) ayant une troisième partie centrale exposée et le troisième conducteur de blindage (134) ayant une troisième partie de blindage exposée, dans lequel la première partie centrale exposée est soudée par ultrasons à la deuxième partie centrale exposée et à la troisième partie centrale exposée ;
une couche isolante flexible (512) enroulée autour des première, deuxième et troisième parties centrales exposées (122) soudées par ultrasons ;
une couche conductrice flexible (518) enroulée autour de la couche isolante flexible (512) et des première, deuxième et troisième parties de blindage exposées ;
**caractérisée par**
une section de tube thermorétractable (520) dans laquelle la couche conductrice flexible (518) et des parties des première, deuxième et troisième gaines isolantes (124, 126, 128) sont enfermées, dans lequel la section de tube thermorétractable (520) est en contact par compression avec la couche conductrice flexible (518) et les parties des première, deuxième et troisième gaines isolantes (124, 126, 128), et vient en prise de manière étanche avec les première, deuxième et troisième gaines isolantes (124, 126, 128) ; et
un boîtier isolant (144) ayant une cavité longitudinale (154) s'étendant à travers celui-ci dans laquelle la section de tube thermorétractable (520), la couche conductrice flexible (518) et des parties des première, deuxième et troisième gaines isolantes (124, 126, 128) sont disposées.

2. Ensemble de faisceaux de fils (100) selon la revendication 1, dans lequel la couche conductrice flexible (518) est formée de brins de fils tressés.

3. Ensemble de faisceaux de fils (100) selon les revendications 1 ou 2, comprenant en outre :
un premier joint élastique (146) disposé à l'intérieur de la cavité longitudinale (154) entre la première gaine isolante (124) et le boîtier isolant (144) ; et
un second joint élastique (148) disposé à l'intérieur de la cavité longitudinale (154) entre la deuxième gaine isolante (126), la troisième gaine isolante (128) et le boîtier isolant (144).

4. Ensemble de faisceaux de fils (100) selon la revendication 3, comprenant en outre :
un premier capuchon de retenue (150) fixé au boîtier isolant (144) configuré pour retenir le premier joint élastique (146) à l'intérieur du boîtier isolant (144) ; et
un second capuchon de retenue (152) fixé au boîtier isolant (144) configuré pour retenir le second joint élastique (148) à l'intérieur du boîtier isolant (144).

5. Procédé (200) de formation d'un ensemble de faisceaux de fils (100), comprenant les étapes :
de fourniture (202) d'un premier câble à fil blindé (110) ayant un premier conducteur central (116) entouré au moins partiellement axialement par un premier conducteur de blindage (130) qui est au moins partiellement entouré axialement par une première gaine isolante (124), le premier conducteur central (116) ayant une première partie centrale exposée et le premier conducteur de blindage (130) ayant une première partie de blindage exposée ;
de fourniture (202) d'un deuxième câble à fil blindé (112) ayant un deuxième conducteur central (118) entouré au moins partiellement axialement par un deuxième conducteur de blindage (132) qui est au moins partiellement entouré axialement par une deuxième gaine isolante (126), le deuxième conducteur central (118) ayant une deuxième partie centrale exposée et le deuxième conducteur de blindage (132) ayant une deuxième partie de blindage exposée ;
de fourniture (202) d'un troisième câble à fil blindé (114) ayant un troisième conducteur central (120) entouré au moins partiellement axialement par un troisième conducteur de blindage (134) qui est au moins partiellement entouré axialement par une troisième gaine isolante (128), le troisième conducteur central (120) ayant une troisième partie centrale exposée et le troisième conducteur de blindage (134) ayant une troisième partie de blindage exposée,
de fourniture (202) d'une couche isolante flexible (512) ;
de fourniture (202) d'une couche conductrice flexible (518) ;
de fourniture (202) d'une section de tube thermorétractable (520) ;
de fourniture (202) d'un boîtier isolant (144) ayant une cavité longitudinale (154) s'étendant à travers celui-ci ;
de jonction (204) des première, deuxième et troisième parties centrales exposées à l'aide d'un processus de soudage par ultrasons ;
d'enroulement (206) de la couche isolante flexible (512) autour des première, deuxième et troisième parties centrales exposées (122) jointes ;
d'enroulement (208) de la couche conductrice flexible (518) autour de la couche isolante flexible (512) et des première, deuxième et troisième parties de blindage exposées ;
**caractérisé par**
l'enroulement (210) de la section de tube thermorétractable (520) autour de la couche conductrice flexible (518) et des première, deuxième et troisième parties de blindage exposées ;
la disposition (212) de la couche conductrice flexible (518) et des parties des première, deuxième et troisième gaines isolantes (124, 126, 128) à l'intérieur de la section de tube thermorétractable (520) ;
le chauffage de la section de tube thermorétractable (520) de sorte qu'elle est en contact par compression avec la couche conductrice flexible (518) et les parties des première, deuxième et troisième gaines isolantes (124, 126, 128), dans lequel la section de tube thermorétractable (520) vient en prise de manière étanche avec les première, deuxième et troisième gaines isolantes (124, 126, 128) ; et
l'insertion (214) de la section de tube thermorétractable (520), de la couche conductrice flexible (518) et des parties des première, deuxième et troisième gaines isolantes (124, 126, 128) à l'intérieur de la cavité longitudinale (154) du boîtier isolant (144).

6. Procédé (200) selon la revendication 5, dans lequel la couche conductrice flexible (518) est formée de brins de fils tressés.

7. Procédé (200) selon la revendication 5 ou 6, comprenant en outre les étapes :
de fourniture (216) d'un premier joint élastique (146) et d'un second joint élastique (148) ;
de disposition (218) du premier joint élastique (146) à l'intérieur de la cavité longitudinale (154) entre la première gaine isolante (124) et le boîtier isolant (144) ; et
de disposition (218) du second joint élastique (148) à l'intérieur de la cavité longitudinale (154) entre la deuxième gaine isolante (126), la troisième gaine isolante (128) et le boîtier isolant (144).

8. Procédé (200) selon la revendication 7, comprenant en outre les étapes :
de fourniture (220) d'un premier capuchon de retenue (150) et d'un second capuchon de retenue (152) ;
de fixation (222) du premier capuchon de retenue (150) au boîtier isolant (144), retenant ainsi le premier joint élastique (146) à l'intérieur du boîtier isolant (144) ; et
de fixation (222) du second capuchon de retenue (152) au boîtier isolant (144), retenant ainsi le second joint élastique (148) à l'intérieur du boîtier isolant (144).
